Europäisches Patentamt

European Patent Office

Office européen des brevets

(11) Publication number: **0 277 603**
**A2**

# EUROPEAN PATENT APPLICATION

(21) Application number: **88101306.4**

(22) Date of filing: **29.01.88**

(51) Int. Cl.4: **C10M 169/04** , //(C10M169/04,
107:50,125:26,129:40),
C10N10:04;C10N40:00

(30) Priority: **05.02.87 IT 1241587**

(43) Date of publication of application:
**10.08.88 Bulletin 88/32**

(84) Designated Contracting States:
**AT BE CH DE ES FR GB GR LI NL**

(71) Applicant: **LA TECNOCHIMICA S.A.S. DI UGO
MESTRALLET & C.**
**Piazza Risorgimento n. 8**
**I-10143 Torino(IT)**

(72) Inventor: **Mestrallet, Ugo**
**Piazza Risorgimento N.8**
**I-10143 Torino(IT)**

(74) Representative: **Ferrarotti, Giovanni**
**Studio Consulenza Tecnica Dr. Ing. Giovanni**
**Ferrarotti Via Alla Porta Degli Archi 1/7**
**I-16121 Genova(IT)**

(54) Silicon emulsion for cork lubrication and sealing of bottles and other containers of long shelf-life beverages and foodstuffs.

(57) This invention covers a lubricant and sealant to be applied on corks, consisting in a stable emulsified mixture of pure fluid silicone and an inert non toxic substance such as atomized amorphous silica gel or metallic salt stearate, so that the resulting product has a higher density than pure fluid silicone, not seeping into the contents, while ensuring perfect lubrication and sealing of the corks and remaining unaltered even during high temperature pasteurization and during the subsequent cooling stage.

EP 0 277 603 A2

It is well known that many drinks, especially wine, are marketed in bottles or other corked containers.

These corks are usually coated with hydrocarbon based lubricants or sealants such as for instance paraffin or vaselin to facilitate corking of the bottles and subsequent removal of these corks and also to provide a perfect seal and organoleptic preservation of the bottled product.

It is also well known that it is necessary to prevent refermentation, especially of sweet wines, after bottling since this might cause serious trouble.

In the past, anti-fermentation products were used to inhibit such refermentation but modern technology is now geared towards pasteurization or high-temperature bottling of the products to be stabilized.

For instance, wine is pasteurized at about 50° - 60°C while other products may require a pasteurization temperature of almost 100°C.

Since paraffin and vaselin have their melting point at about 40°C, these products tend to melt during pasteurization and may trickle or seep into the container, which would be unbecoming both for the appearance and for the organoleptic quality of the product.

Attempts were made to obviate these drawbacks by using pure fluid silicone as a cork coating, because this product is harmless and remains unaltered during pas teurization and subsequent cooling down. However, its utilization was found to be inadequate, since pure fluid silicone by its low surface tension, excessively impregnated the corks, also showing a marked tendency to seep into the container during bottling. After sealing, pure liquid silicone tends to trickle into the container during bottling, while it also tends to impregnate the cork after sealing, thus causing the cork to creak when removed, due to insufficient surface lubrication.

This Invention has the aim to utilize a cork lubricating and sealing coat which will remain unaltered during corking and uncorking as well as during pasteurizing while remaining unaffected by frost which will cause no crystallization.

According to the Patent, this result is achieved, by adding a physically inert and non toxic substance to a pure fluid silicone so as to prepare, with suitable equipment, a stable emulsion having the desired density. The silicone based emulsion thus obtained will prevailingly spread and anchor on the cork surface thus ensuring perfect lubrication and optimum handling of the corks without any trouble whatsoever during bottling and uncorking.

The emulsion thus obtained remains unaltered and will not trickle into the containers during the bottling stage; the cork can be easily removed; there will be no seepage due to pasteurization, no cold seizure and excellent sealing of the containers.

According to the invention, the silicone based fluid is preferably transformed into a stable silicone emulsion of the required density by adding atomized amorphous silica gel or a metallic salt stearate such as Ca, Al, Zn, etc. The emulsion obtained with suitable equipment will be stable and homogenous.

The two above mentioned additives of pure fluid silicone will result in emulsions having different appearances to be selected according to the specific user requirements. The atomized amorphous silica gel additive will yield either a liquid of the desired density or else a transparent paste through which the cork will be clearly visible. However the emulsion will become opaque white when adding a metallic salt stearate.

On this subject, it should be observed that a metallic salt stearate is by itself already a lubricant and sealant.

The stable emulsion, subject matter of this Patent, has also the property of reducing by 50% the natural release of cork into the beverages.

As a guidance, the amount of additive to be emulsified with pure fluid silicone may range from 20% to 40% in weight, according to the required density of the finished product to be applied on the corks.

This emulsified product may therefore be either a more or less dense liquid or a paste. The quality of the cork, i.e. its compactedness and porosity will of course affect the choice of the emulsion.

The above considerations for corking of wine bottles is also valid for corks of other bottled products such as soft drinks, preserved or potted foodstuffs, jam and marmelade and, more generally, liquid or loose products with long shelf life, irrespective of whether or not they require high temperature pasteurization.

Obviously, any other non toxic and inert product may be added to the pure fluid silicone in order to increase the latter's density.

## Claims

1°) Silicone based emulsion for lubrication and sealing of corks, **characterized** by the fact that an inert and non toxic product is added to pure fluid silicone so as to obtain, with the aid of appropriate equipment, a stable homogeneous emulsion having the desired density which is higher than the density of pure fluid silicone and to optimize cork lubrication and seal, while preventing the lubricant from penetrating into the container during bottling, pasteurization or its seizure due to cold.

2°) Emulsion as described in claim n°1, **characterized** by the fact that the product to be added to the pure fluid silicone is atomized amorphous silica gel.

3°) Emulsion as described in claim n°1, **characterized** by the fact that the product to be added to the pure fluid silicone is a metallic salt stearate.

4°) Emulsion as described in claim n°1, **characterized** by the fact that the product to be added to pure fluid silicone has usually a mixture strength ranging between 20% and 40% in weight, thus obtaining a fluid or pasty silicone based emulsion.